# EUROPEAN PATENT APPLICATION

(11) **EP 2 757 082 A1**
(43) Date of publication of application: **23.07.2014**
(21) Application number: 14382011.6
(22) Date of filing: 16.01.2014
(51) Int. Cl.: C04B 33/14, C04B 35/626, C09K 3/00, E01C 13/00, C04B 33/02, C04B 33/18

(54) **Colored terracotta and method for obtaining it**

(30) Priority: 18.01.2013 ES 201330052
(71) Applicant: Proacman Sport, S.L., 07620 Llucmajor (ES)
(72) Inventor: CATALA ROIG, JUAN PEDRO, 07141 PORTOL - MARRATXI (ES); PUIGSERVER RIGO, ANDRÉS, 07620 LLUCMAJOR (ES)
(74) Representative: Baños Treceño, Valentín

(57) **Abstract**

Improved colored terracotta or clay source material, which is obtained by mixing, in cold, a ceramic paste with a clay source coloring agent and a flux, to which water is added, and that once it has been mixed, dried, fired and grounded, colored terracotta is obtained, which preferably is used in sport facilities, namely tennis courts.

## Description

### OBJECT OF THE INVENTION

The following invention relates to a colored and improved terracotta or clay source material, which is obtained by mixing, in cold, a ceramic paste with a clay source coloring agent and a clay source flux, to which water is added, and that once it has been mixed, dried, fired and grounded, a colored surface of beaten earth is obtained, which preferably is used in sport facilities, namely tennis courts.

### BACKGROUND OF THE INVENTION

Many sectors, among which professional sport and more particularly tennis stand out, are undergoing an evolution in the materials used, and in this sense, the court surface is essential for the sport practice.

Going into greater detail, in the tennis world the most common surface types are natural grass; concrete or asphalt hard-courts covered with an acrylic paint; and beaten earth surfaces; although other types of surfaces have been approved by the International Tennis Federation.

In all the sports, the tendency is to have courts on which the game is practiced in a color providing a perfect contrast between ball, players and surface. In this context, increasingly more blue surfaces can be seen, however, this surface is difficult to obtain, since when adding a blue coloring agent to conventional beaten earth, the sport action combined with the action of atmospheric agents, makes the blue color to fade over time.

The aim of this patent is to develop a final material blue in color, solving the aforementioned problems, and that is achieved by mixing all the basic elements from the very beginning, and not in different mixing stages, which increases time, price and the risks of failure. To obtain the final result novel elements had to be introduced as well as a method involving great research effort had to be developed.

Patent ES 2 382 783, from the same applicant of the present invention, stands out as the closest prior art. Said patent discloses a fine blue beaten earth, obtained from the initial treatment of a raw material, which is fired, dried and then at that moment an acrylic coloring agent having certain characteristics is added. As previously indicated, the new invention consists in mixing all the components with water from the first instant, including the coloring agent, since all of them are in a solid state this changes the nature of these elements, and then proceeding to their firing, drying and screening, moreover, the percentages and characteristics of the elements are also different from one patent to the other.

Previously, colored products attempting to solve this visual problem have also been disclosed, particularly in patent ES 2 349 524 of INNOVACIÓN and CONSULTING TECNOLÓGICO, which discloses products in which beaten earth is mixed with a coloring agent using a percentages of 80 % beaten earth at a firing temperature of 1200° and 20 % water-based coloring agent having a 60 % minimum content of water. In addition to the color fading problems that, according to the disclosed description, would take place, both patents differ not only in the materials with which they are obtained, but also in the method for obtaining them, which is completely different.

The invention object of this patent, not only solves the previously mentioned problems, but in addition it improves the product and the method for obtaining colored beaten earth, the entire process being faster and more advantageous, given that it consists in initially mixing, in cold, the ceramic paste or clay earth, the coloring agent and the flux, which are then all fired together, dried and subsequently the obtained product is screened in order to obtain directly said blue beaten earth, which is fit for playing.

### DESCRIPTION OF THE INVENTION

The invention consists in obtaining a final colored material from ceramic source components, which therefore requires a method for obtaining it.

Firstly, the initial composition of the mixture is detailed, which is as follows:
- Clay or ceramic paste.
   The general composition for this type of paste is 45-55 % (by weight) clayey substance, 30-45 % (by weight) quartz, 10-30 % (by weight) calcium carbonate CaCO3, these ranges being combinable so that the total is always 100 %.
   This clay or ceramic paste is therefore composed of a combination of components such as silica or silicon dioxide SiO2, alumina or aluminum oxide A1203, calcium oxide or quicklime CaO, these being the main components, but it is also composed of components such as titanium dioxide TiO2, magnesium dioxide or magnesia MgO, sodium oxide Na2O, potassium oxide K2O or iron oxide Fe2O3, or a combination thereof.
   A necessary characteristic is that the content of Fe2O3 should be comprised between 0 and 1 % of the total composition.
   The preferred relationship shall be 50 % clay, to 30 % quartz and to 20 % calcium carbonate.
- Ceramic coloring agent.
   The coloring agent contains blue ceramic pigment made up of metal oxides such as cobalt, iron, silica or alumina.
   Preferably, the coloring agent to be used is a blue inorganic pigment, made from cobalt aluminate CoAl2O4, with physical and chemical properties such as having a bluish powder appearance, being in a solid state, odorless, and being a lead and cadmium-free material, wherein the recommended firing temperature is between 980° and 1300°.
   Although the preferred coloring agent is blue, it should be noted that other coloring agents based on metallic oxides determining other colors, might be added.
- Flux.
   To counter the refractory effect of the coloring agent and its antiplastic effect on the ceramic paste, since it diminishes cohesion, a ceramic flux based on alkali or boracid, such as for example boric oxide B2O3, should be added. If the flux is not alkaline, for example a lead compound, it could alter the final color of the mixture. For safety reasons, if required, alkaline oxides already fired and subsequently grounded may be used to replace the fluxing alkaline oxides in their natural state.

The second aspect, which is an object of this invention, is to detail the method for obtaining the colored material used as a surface, specially intended to form the final layer of beaten earth in sport facilities, namely in tennis courts. The method consists of the following stages:
a).- Initial mixture of the clay source components, wherein the recommended ranges (by weight %) or margins for mixing these components, which can be combined so the total is always 100 %, are as follows:
- Ceramic paste 62.50 - 83.30 %
- Ceramic coloring agent 8.30 - 18.75 %
- Flux 8.30 - 18.75 %
   These components should be mixed in a dry state and should be ground or crushed so they are in a powdered form
   No material is rejected.
   The characteristics of the aforementioned components should be respected.
   A preferred relationship would be:
- Ceramic paste 71.42 %
- Ceramic coloring agent 14.29 %
- Flux 14.29 %
b). - Water is added to the initial mixture of the clay source components, the recommended margins (by weight), which may be combined so that the total is always 100 %, are:
- Water 6 - 40 %
- Clayey mixture 60 - 94 %
c). - The mixture of water and clayey mix is stirred until obtaining a paste or mass without clumps and homogeneous in color.
If it is not properly stirred, so as to avoid the formation of clumps and to obtain a homogeneous color, white particles could arise during the final grinding.
The color should not create something similar to a marble effect, it should be homogeneous instead, and the same stands for the clumps.
The final shade of the color varies with the drying and the firing.
d). - Drying of the mass.
The entire clay source mass shall be completely dry. The drying depends on the
degree of moisture of the paste and not on the time or the means used for this purpose.
Should the mass not be completely dry, it could explode inside the kiln.
e). - Firing of the mass.
The entire mass must be completely dry before the firing process. This mass, which already forms a colored material, will be fired at a temperature between 950 - 1050° in order to obtain an optimal result as far as color and hardness is concerned.
The rate at which the temperature will increase will be progressive as far as the kiln allows so, and it will not be necessary to maintain it once it has been reached.
The preferred temperature will be 1000°.
f). - Cooling down the mass.
The mass is allowed to cool down to room temperature. This material will now be colored terracotta, as we have commented; it will preferably have an intense blue color, with the same porosity and hardness conditions than the conventional beaten earth, and therefore fit for its intended use.
g). - Grinding and screening the terracotta.
The terracotta, which as we have already mentioned in the previous stage now has the porosity and hardness of the conventional materials, is ground or crushed, and later on is screened by means of standardized screens, with the optimal particle size for its intended use.
This particle size will be determined by the specifications and/or regulations the client requires, in addition to complying with International Standards, such as ISO, ASTM or the like.
In the case of the International Tennis Federation, the parameters that the court must meet have been established. Therefore, the final product should preferably present a mesh particle size comprised between 0.01 mm and 1.25 mm, according to the Spanish Standard UNE 103-101, said particle size distribution being the ideal where warm climate is predominant. In the case of rainy climates, this beaten earth may have a particle size comprised between 0.01 mm and 2.00 mm, according to the Spanish Standards UNE 103-101. These two particle sizes can be observed in the following Table 1.

**Table 1**

| Screen (mm) | % passing through the screen | |
|---|---|---|
| | WARM CLIMATE | RAINY CLIMATE |
| 0.08 | 43-50 | 18-22 |
| 0.16 | 51-56 | 27-31 |
| 0.40 | 59-65 | 37-42 |
| 0.63 | 68-73 | 48-53 |
| 1.25 | 100 | 85-90 |
| 2.00 | 100 | 100 |

As is known, the general constructive system of a surface for diverse uses, for example sports, and more specifically tennis, presents a series of superimposed layers, executed according to different regulations and technical specifications, on a level and compacted ground. In the case of the constructive system for a tennis court, it will be as follows:
* There is a treatment of the natural terrain, which can go from the scaling of an excavation, up to the simple cleaning of field vegetable and compaction.
* Subsequently, there is the extension, leveling and compacting of gravel and ceramic rubble, making up the lower layer. This lower layer preferably will have approximately 25 cm in thickness, and a particle size of between 30-40 mm.
* The intermediate layer is formed by the extension, leveling and compacting of a mixture of different aggregates selected with a particle size preferably between 2 and 10 mm, and hydraulic lime, forming an approximately 5 cm thick, layer.
* The surface layer is formed by extending beaten earth forming, preferably a layer with a thickness ranging from 5 to 10 mm. It is in this layer where the invention, which is the object of this patent, is applied.

Finally, the last aspect of this invention relates to the use of this colored terracotta, according to the aforementioned characteristics, which as we already have commented is to manufacture a colored surface, preferably a colored sports facility, namely a tennis court.

Next, there is an example of how the composition of the invention is prepared. In no case is this example intended to limit the scope of the invention, being solely provided for illustrative purposes.

### Sample preparation

500 kilos of clay or clay paste, 300 kg of quartz and 200 kg of calcium carbonate, in addition to 200 kg of ceramic dye made from blue cobalt aluminate pigments CoAl2O4 and 200 kg of ceramic flux with an alkaline base of boric acid B2O3, all of them in a dry state and with a dust size, are mixed all together in a tank of appropriate dimensions. 400 liters of water are added and the entire mixture is stirred until achieving a mass without clumps and with a homogeneous blue color, after which is allowed to dry.

Once the mass is completely dry it is fired, increasing progressively the temperature up to 1000°, achieving thus the optimal result in terms of color and hardness, so subsequently once it has cooled down, is crunched and screened according to the desired mesh and particle sizes.

The nature of the invention having been sufficiently described in the foregoing, taking into account that the terms used for drafting this specification should be understood in a wide not-limiting sense, as well as the practical embodiments of the description, and having demonstrated that it is a positive technical advance, the registration of this patent is therein requested, being what constitutes the essence of said invention, specified in the following claims.

## Claims

1. Improved colored terracotta **characterized in that** its initial components, which are dry mixed, and have a dust size, are:
- a ceramic source paste, made up of a clayey substance, quartz and calcium carbonate, thus combining the main components SiO₂, Al₂O₃, CaO, optionally with components TiO₂, MgO, Na₂O, K₂O or Fe₂O₃ or a combination thereof, wherein the relationship of Fe₂O₃ should always be comprised between 0 and 1 %;
- a ceramic coloring agent, made up of metal oxides;
- ceramic flux based on alkali or boracid.

2. Colored terracotta according to claim 1 wherein the ceramic coloring agent is **characterized in that** it is a blue pigment made from cobalt aluminate CoAl₂O₄.

3. Colored terracotta according to claim 1 wherein the ceramic flux is **characterized in that** it is based on boric oxide B₂O₃.

4. Method for obtaining colored terracotta according to claims 1 to 3, which comprises the following stages:
a) Preparing an initial composition made up of a dry mixture of ceramic paste 62.5 - 83.3 % (by weight), ceramic coloring agent 8.3 - 18.75 % (by weight), ceramic flux 8.3 - 18.75 % (by weight), adjusted separately so that the total is 100%.
b) Water is added to the mixture, maintaining a relationship by weight of ceramic mixture 60-94 % to water 6-40 %, adjusted so that the total is 100 %.
c) The mixture of water and clayey mix is stirred until obtaining a paste or mass without clumps, homogeneous in color.
d) The mass is allowed to dry completely.
e) The mass is fired between 950° and 1050°
f) The mass, which can now be considered as terracotta, is cooled down to room temperature.
g) The terracotta is ground and screened, thus obtaining the final product.

5. Method according to claim 4, wherein the stage a) is **characterized in that** the ceramic paste has a composition that is 45-55 % clayey substances, 30-45% quartz and 10-30% calcium carbonate.

6. Method according to claim 3, the screening of stage f) is **characterized in that** it is carried out with a standardized mesh.
